# EUROPÄISCHE PATENTSCHRIFT

(11) **EP 2 444 604 B1**
(45) Veröffentlichungstag und Bekanntmachung des Hinweises auf die Patenterteilung: **20.09.2017**
(21) Anmeldenummer: 11000928.9
(22) Anmeldetag: 05.02.2011
(51) Int. Cl.: F01M 11/04, F16H 57/04

(54) **Aufnahmebehältnis für ein Fluid, insbesondere Motorölwanne oder Getriebeölwanne für ein KFZ**
Container for a fluid in particular motor oil pan or gear oil pan for a motor vehicle
Récipient de réception pour un fluide, notamment carter d'huile de moteur ou carter d'huile de boîte de vitesses pour un véhicule automobile

(30) Priorität: 19.10.2010 DE 102010048711
(43) Veröffentlichungstag der Anmeldung: 25.04.2012
(73) Patentinhaber: IBS Filtran Kunststoff-/Metallerzeugnisse GmbH, 51597 Morsbach (DE)
(72) Erfinder: Buchen, Marc, 51597 Morsbach (DE); Stausberg, Wolfgang, 51597 Morsbach (DE); Klüser, Jörg, 51598 Friesenhang (DE)
(74) Vertreter: Kierdorf Ritschel Richly

(56) Entgegenhaltungen:
- DE-A1-102008 057 518
- DE-C1- 3 817 981
- DE-T2- 69 811 401
- DE-U1-202005 004 943
- US-A1- 2008 000 724

## Beschreibung

Die Erfindung betrifft eine Motorölwanne oder eine Getriebeölwanne für ein Kraftfahrzeug, mit wenigstens einer in Einbaulage unteren Entleerungsöffnung und mit wenigstens einem in die Entleerungsöffnung einsetzbaren Verschlusskörper, wobei die Entleerungsöffnung und der Verschlusskörper komplementär zueinander ausgebildete Teile eines das Aufnahmebehältnis abdichtenden Verschlusses bilden und wobei der Verschluss als Bajonettverschluss ausgebildet ist.

Ein derartiges Aufnahmebehältnis ist beispielsweise aus der DE 20 2008 009 179 U1 in Form einer Ölwannenanordnung eines Kraftfahrzeuges bekannt. Die DE 20 2008 009 179 U1 beschreibt insbesondere eine Motorölwanne in Leichtbauweise, die beispielsweise aus Aluminiumdruckguss oder Kunststoff bestehen kann. In diesem Zusammenhang wird insbesondere Polyamid als ein geeignetes Material zur Herstellung einer Kunststoffölwanne beschrieben. Insbesondere bei Kunststoffölwannen können die Ölablassstopfen nur mit verhältnismäßig geringen Drehmomenten gesichert werden. Beispielsweise bei Getriebeölwannen aus Kunststoff wird zur Schonung des Gewindes ein Drehmoment im Bereich von etwa 8 Nm als Anzugsmoment vorgeschrieben. Bei Wartungsarbeiten kann es vorkommen, dass die Ölablassschraube nicht sachgerecht angezogen wird. Bei Verzicht auf einen Drehmomentschlüssel kann es zu einer Beschädigung oder sogar zum Ausreißen des Gewindes in der Ölwanne kommen. Um diesem Problem gerecht zu werden, wird in der DE 20 2008 009 179 U1 ein Gewinde mit Kulissenführung vorgeschlagen, welches auf der Außenseite der Ölwanne angeordnete Drehanschläge aufweist, die so beschaffen sind, dass die Drehanschläge für den Benutzer eine sichtbare Kontrolle ermöglichen, ob sich der Ölablassstopfen in seiner vorgeschriebenen geschlossenen und dichtenden Betriebsposition befindet. Hierdurch ist weitestgehend sichergestellt, dass das Gewinde, die Kulissenführung oder gegebenenfalls der Bajonettverschluss nicht überbelastet wird.

Insbesondere Gewinde oder Kulissenführungen, wie sie beispielsweise in der DE 20 2008 009 179 U1 beschrieben sind, sind verhältnismäßig schwierig "kunststoffgerecht" auszuführen. Wenn die entsprechenden Bauteile wie beispielsweise die Ölwanne und der Ölablassstopfen im Spritzgießverfahren hergestellt werden sollen, sind die hierfür benötigten Werkzeuge verhältnismäßig aufwendig, da ein Drehkern für die Gewindeentformung vorgesehen werden muss.

Dies bedeutet insbesondere bei einem Mehrfachwerkzeug, dass üblicherweise zur Anwendung kommen wird, einen hohen Aufwand.

Abgesehen davon, dass der Einschraubvorgang der Ölablassschraube, wie in der DE 20 2008 009 179 U1 beschrieben, wegen der erforderlichen Einhaltung der geringen Anzugsmomente nur mit besonderen Mitteln sichergestellt bzw. bewerkstelligt werden kann, ist bei Systemen mit Verschlussstopfen aus Kunststoff mit Gewinden aus Kunststoff oder mit Kulissenführungen aus Kunststoff die Dichtigkeit verhältnismäßig schwer zu gewährleisten. Das hängt insbesondere damit zusammen, dass die für die Dichtigkeit des Systems erforderliche Vorspannung des Verschlussstopfens bei Formänderungen des Materials aufgrund von Temperaturschwankungen verloren gehen kann. Eine Motorölwanne der eingangs genannten Art ist beispielsweise aus der US 2008/0000724 A1 bekannt. Der Ölablassstopfen der Motorölwanne ist in einer vorgegebenen indexierten Winkellage so in die Ölwanne einsetzbar, dass der Olablassstopfen unverlierbar innerhalb der Öffnung mittels Rastfedern gehalten wird. Der Verschlusskörper des Ölablassstopfens besitzt einen gestuften Durchmesser sowie j-förmige Führungsschlitze/Führungskulissen, die mit radial in die Ölablassöffnung hereinragenden Führungszinken so zusammenwirken, dass der Verschlusskörper erst in der axial eingedrückten Stellung des Ölablassstopfens verdrehbar ist.

Die DE 10 2008 057 518 A1 betrifft eine Verschlusseinrichtung für eine Ölwanne, die als Baionettverschluss ausgebildete ist, wobei die Verschlusseinrichtung mit der Einfassung einer Behälteröffnung, einem Verschlusskörper und einer Abdeckung zu einem integralen Bauteil zusammengesetzt ist und der Verschlusskörper innerhalb der Verschlusseinrichtung mittels einer Feder in die geöffnete Stellung vorgespannt ist. Darüber hinaus ist das Verschlusselement beziehungsweise der Verschlusskörper zwischen der Einfassung und der Abdeckkappe unverlierbar angeordnet.

Aus der DE 20 2005 004 943 U1 ist ein Verschlussdeckel für Ölablassöffnungen an Kraftfahrzeugmotoren beschrieben, der eine Handhabe mit einem Befestigungsschaft sowie ein Dichtelement aufweist, wobei der Befestigungsschaft an seinem der Handhabe abgewandten Ende mit einem Bajonettelement starr verbunden ist und einem der Handhabe zugewandten Bereich des Befestigungsschafts das Dichtelement radial dichtend vorgesehen ist. Die Öffnung und der Verschlussdeckel sind so ausgebildet, dass der Verschlussdeckel nur in einer ausgezeichneten Winkellage in die Verschlussöffnung einsetzbar ist.

Ein vergleichbarer Verschlussdeckel einer mit einem Getriebegehäuse verbundenen Ölwanne eines Fahrzeugsantriebs ist beispielsweise auch aus der DE 38 17 981 C1 bekannt.

Schließlich ist aus der DE 698 11 401 T2 eine Verschlussvorrichtung für eine Öleinfüllöffnung bekannt, die ebenfalls nach Art eines Baionettverschlusses ausgebildet ist, wobei eine ringförmige Querwand an einer zylindrischen Öffnung zur Aufnahme der Verschlussvorrichtung mit einer indizierten Öffnung zum Einsetzen des Deckels versehen ist und an der Unterseite Klemmrampen aufweist, die einen Klemmsitz des Deckels ermöglichen.

Der Erfindung liegt die Aufgabe zugrunde, einen Baionettverschluss der eingangs genannten Art hinsichtlich einer kunststoffgerechten Auslegung zu verbessern, insbesondere sollen sämtliche miteinander in Eingriff zu bringenden Teile des Verschlusses ohne Hinterschnitte herstellbar sein, so dass eine Herstellung durch Spritzgießen mittels einfachsten Werkzeugen möglich ist.

Die Aufgabe wird gelöst mit den Merkmalen des Anspruchs 1 vorteilhafte Ausgestaltung der Erfindung ergeben sich aus den Unteransprüchen.

Anders als bei bekannten Verschlusssystemen nach dem Stand der Technik ist erfindungsgemäß vorgesehen, die Dichtfunktion vollständig von der Verschlussfunktion zu entkoppeln. Mit anderen Worten, die Dichtigkeit des Systems wird unabhängig von den zur Verriegelung benötigten Vorspannkräften gewährleistet.

Der Verschlusskörper ist erfindungsgemäß schwimmend in der Entleerungsöffnung gelagert, so dass auf diese Art und Weise Formänderungen des Materials aufgrund von Temperaturänderungen kompensiert werden können.

Zweckmäßigerweise ist die lichte Weite der Entleerungsöffnung größer als der Durchmesser des die Entleerungsöffnung durchsetzenden Teils des Verschlusskörpers, wobei das Übermaß der Entleerungsöffnung so gewählt ist, dass der Verschlusskörper mit radialem Spiel in die Entleerungsöffnung einsetzbar ist.

Das Aufnahmebehältnis gemäß der Erfindung ist vorzugsweise als Motorölwanne oder als Getriebeölwanne ausgebildet und besteht vorzugsweise aus thermoplastischem Kunststoff. Beispielsweise kommt als Material sowohl für das Behältnis selbst als auch für den Verschlusskörper Polyamid in Betracht.

Da der Verschluss als Bajonettverschluss ausgebildet ist, können sämtliche miteinander in Eingriff zu bringenden Teile des Verschlusses ohne Hinterschnitte ausgebildet sein, so dass eine Herstellung durch Spritzgießen mit einfachsten Werkzeugen möglich ist.

Bei einer besonders bevorzugten Variante des Aufnahmebehältnisses gemäß der Erfindung ist vorgesehen, dass der Verschluss wenigstens einen innenliegend angeordneten Drehanschlag bildet, der eine Endlage des Verschlusskörpers in der verschlossenen Stellung definiert.

Der oder die Drehanschläge sind vorzugsweise so beschaffen, dass eine weitere Drehung des Verschlusskörpers in die Entleerungsöffnung nicht möglich ist. D. h., dass der Drehanschlag als fühlbarer Endanschlag ausgebildet ist, der eine Sichtkontrolle der Einschraubtiefe des Verschlusskörpers entbehrlich macht.

Zweckmäßigerweise ist der Verschlusskörper so ausgebildet, dass er sich im vollständig eingesetzten Zustand in die Außenkontur des Aufnahmebehältnisses fluchtend einfügt.

Zweckmäßigerweise ist eine Verriegelung des Verschlusskörpers in der Endlage bei verschlossener Stellung vorgesehen.

Bei einer bevorzugten Variante des Aufnahmebehältnisses gemäß der Erfindung kann vorgesehen sein, dass zur Verriegelung des Verschlusskörpers in einer Endlage an dessen Umfang wenigstens ein Rastvorsprung und/oder eine Rastvertiefung vorgesehen sind, die mit wenigstens einer Rastvertiefung und/oder einem Rastvorsprung am Umfang der Entleerungsöffnung zusammenwirkt.

Insbesondere da der Verschlusskörper innerhalb der Entleerungsöffnung schwimmend, d. h. mit radialem Spiel gelagert ist, ist beim Eindrehen des Verschlusskörpers in die verriegelte Endstellung eine radiale Ausweichbewegung des Verschlusskörpers möglich, wenn Rastvertiefungen und/oder Rastvorsprünge am Umfang des Verschlusskörpers und am Umfang der Entleerungsöffnung miteinander in Eingriff gelangen.

Vorzugsweise ist die Entleerungsöffnung umfänglich mit Halteflächen und/oder Führungsflächen versehen, die formschlüssig mit Teilen des Verschlusskörpers zusammenwirken.

Der Verschlusskörper kann über wenigstens einen Bogenabschnitt einer Drehbewegung innerhalb der Entleerungsöffnung so geführt sein, dass ein aufgebrachtes Drehmoment in eine Axialbewegung des Verschlusskörpers umgesetzt wird.

Dabei ist zweckmäßigerweise der Verschlusskörper über einen ersten Bogenabschnitt am Umfang der Entleerungsöffnung axial in die verschlossene und vorzugsweise verriegelte Endlage geführt.

Ebenso kann vorgesehen sein, dass der Verschlusskörper über einen zweiten Bogenabschnitt axial von der verriegelten Endlage in eine geöffnete Stellung geführt ist, wobei der erste und zweite Bogenabschnitt bezogen auf den Umfang der Entleerungsöffnung verschiedene Winkelbereiche einnehmen, so dass sowohl die Außenkontur des Verschlusskörpers als auch die Führungs- und Halteflächen am Umfang der Entleerungsöffnung vollständig ohne Hinterschnitte realisiert werden können.

Der zweite Bogenabschnitt der Führung des Verschlusskörpers beschreibt bevorzugt eine Hubbewegung des Verschlusskörpers, die wenigstens so groß ist, wie die Schnurstärke eines an dem Verschlusskörper vorgesehenen Dichtrings, so dass beim Öffnen des Verschlusskörpers wenigstens ein Hub (Axialbewegung des Verschlusskörpers) erzeugt wird, der einen oder mehrere Dichtringe aus der Entleerungsöffnung heraustreibt, so dass der Verschlusskörper ungehindert in Axialrichtung aus der Entleerungsöffnung entnommen werden kann.

Bei einer zweckmäßigen Ausgestaltung des Aufnahmebehälters gemäß der Erfindung ist vorgesehen, dass der Verschlusskörper wenigstens zwei Verriegelungshaken oder Verriegelungszapfen aufweist, die wenigstens in der verschlossenen Endlage des Verschlusskörpers Halteflächen am Umfang der Entleerungsöffnung hintergreifen.

Die Halteflächen bewirken im Zusammenspiel mit den Verriegelungszapfen lediglich eine axiale Verriegelung des Verschlusskörpers, die umfängliche Einspannung erfolgt ausschließlich über ein oder mehrere Dichtmittel, die den Verschlusskörper in der Entleerungsöffnung zentrieren.

Die Erfindung wird nachstehend anhand eines in den Zeichnungen dargestellten Ausführungsbeispiels erläutert.

Es zeigen:
- Figur 1:: eine Unteransicht des Aufnahmebehältnisses gemäß der Erfindung,
- Figur 2:: eine perspektivische Ansicht des Verschlusskörpers,

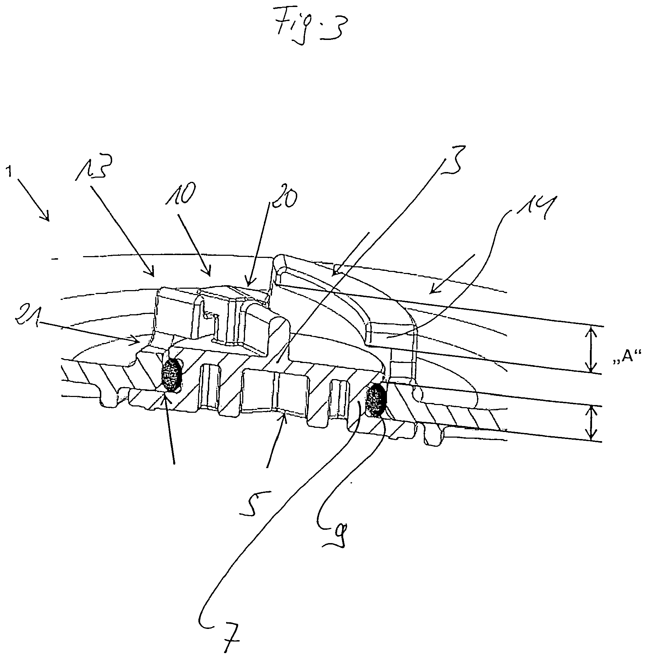

- Figur 3:: einen Teilschnitt durch den Verschluss in perspektivischer Ansicht,
- Figur 4:: eine perspektivische Ansicht der Innenseite des Aufnahmebehältnisses im Bereich des Verschlusses in verriegelter Stellung,
- Figur 5:: eine der Figur 4 entsprechend Ansicht in geöffneter Stellung des Verschlusskörpers,
- Figur 6:: eine Unteransicht des Aufnahmebehältnisses, bei welcher sich der Verschlusskörper in geschlossener Stellung befindet,

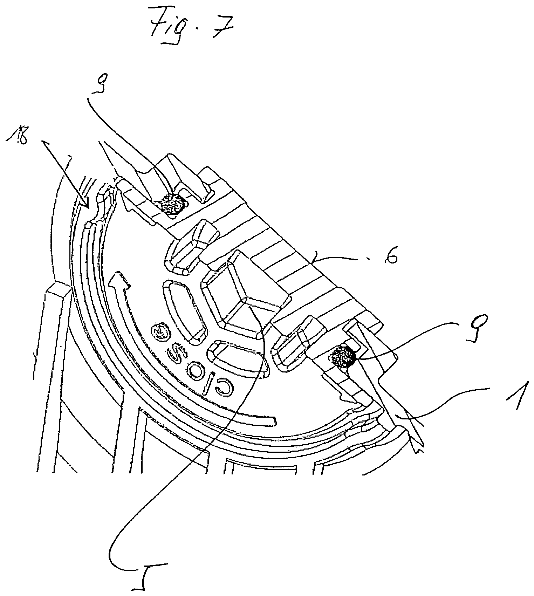

- Figur 7:: einen Teilschnitt durch den geschlossenen verriegelten Verschluss entlang der Linien VII - VII in Figur 1 und
- Figur 8:: eine Schnittansicht entlang der Linien VIII - VIII in Figur 1.

Das Aufnahmebehältnis gemäß der Erfindung ist beispielsweise als Ölwanne 1 aus Polyamid für ein Kraftfahrzeug ausgebildet.

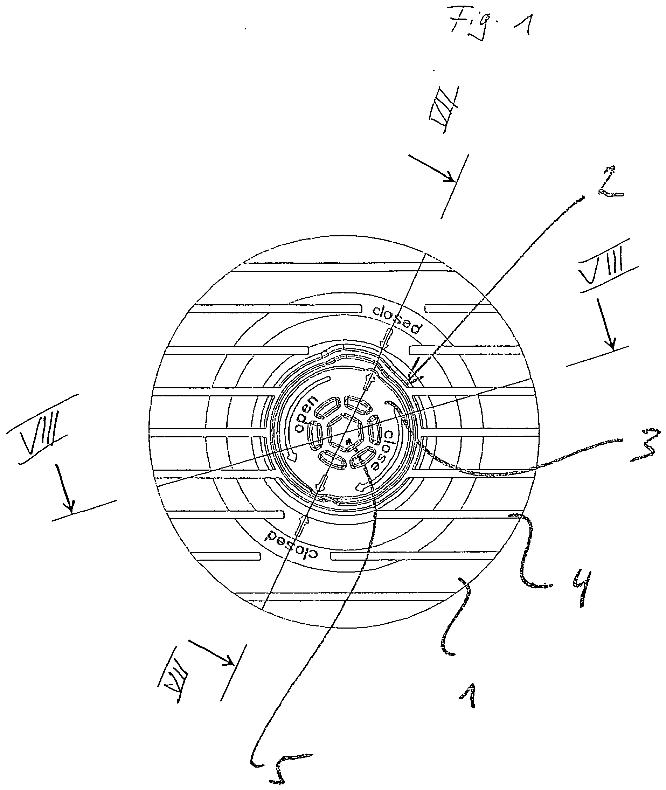

Figur 1 zeigt ausschnittsweise die Unteransicht einer Ölwanne 1 gemäß der Erfindung mit einem in eine Entleerungsöffnung 2 der Ölwanne 1 eingesetzten Ölablassstopfen 3 als Verschlusskörper.

Sowohl die Ölwanne 1 als auch der Ölablassstopfen 3 wurden einstückig aus thermoplastischem Kunststoff durch Spritzgießen erhalten. Die Ölwanne 1 ist auf ihrer Außenseite mit einer Verrippung 4 versehen. Die Wandung der Ölwanne 1 ist mit einer im Wesentlichen kreisrunden Entleerungsöffnung 2 durchsetzt, die mit dem dichtend in diese eingesetzten Ölablassstopfen 3 einen nachstehend näher zu beschreibenden Bajonettverschluss bildet.

Der Ölablassstopfen 3 ist auf seiner Außenseite/Unterseite mit einem Werkzeugeingriff in Form eines Innensechskants 5 versehen.

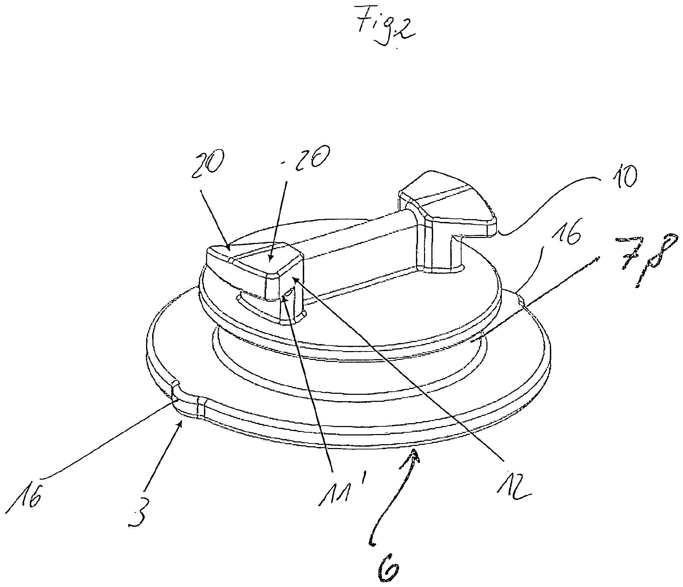

Die Figur 2 zeigt den Ölablassstopfen 3 in perspektivischer Darstellung, wobei die in Figur 1 gezeigte Unterseite/Außenseite des Ölablassstopfens 3 in Figur 2 dem Betrachter abgekehrt ist.

Der Ölablassstopfen 3 umfasst im Wesentlichen einen Verschlussdeckel 6 mit einem einstückig angeformten Körper 7, der in der Einbaulage die Entleerungsöffnung 2 durchgreift. Der Körper 7 des Verschlussdeckels 6 ist mit einer umlaufenden Nut 8 versehen, die der Aufnahme einer O-Ring-Dichtung 9 dient.

An dem Körper 7 des Ölablassstopfens 3 sind innenseitig zwei diametral gegenüberliegend angeordnete Verriegelungshaken 10 vorgesehen, die in der verriegelten Endlage des Ölablassstopfens 3 Halteflächen 11 eines nach innen in die Ölwanne 1 vorstehenden Kragens hintergreifen, welche eine innere Einfassung der Entleerungsöffnung 2 bildet. Die Halteflächen 11 erstrecken sich jeweils nur über einen Teil des Winkelumfangs der Entleerungsöffnung 2 an jeweils diametral gegenüberliegenden Stellen der Entleerungsöffnung 2.

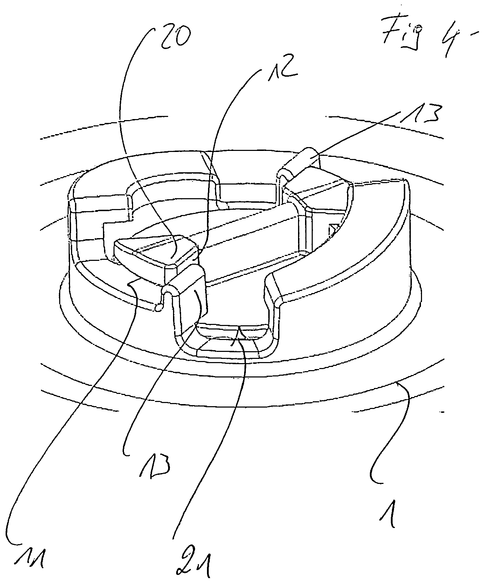

In der in Figur 4 dargestellten verriegelten und verschlossenen Stellung des Ölablassstopfens 3 liegt dieser mit in Drehrichtung führenden Anschlägen 12 der Verriegelungshaken 10 gegen Drehbegrenzungsanschläge 13 am Umfang der Entleerungsöffnung 2 an.

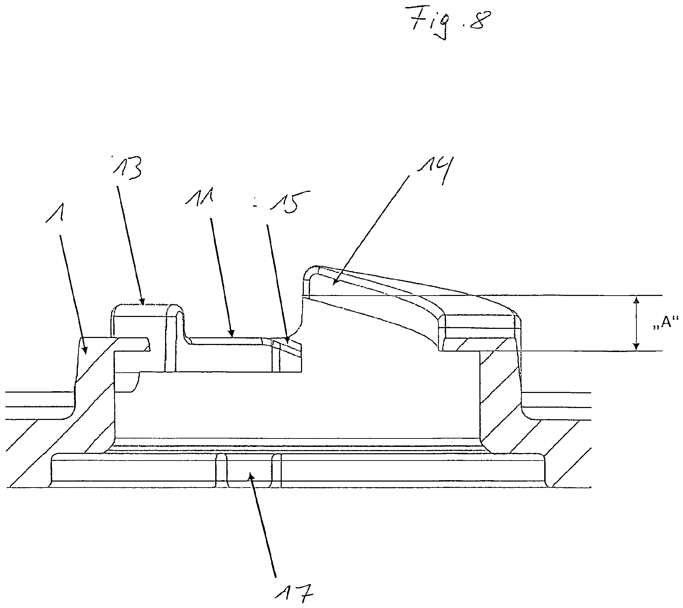

Im Folgenden wird Bezug genommen auf die Figur 8. Aus der dort gezeigten Ansicht lässt die Gestaltung des Umfangs der Entleerungsöffnung 2 über einen Winkelumfang von etwa 180° erkennen. Mit 14 ist eine sich etwa über ein Bogenmaß von 90° erstreckende Schrägführung bezeichnet, an die sich in der Zeichnung (Figur 8) von rechts nach links betrachtet eine Führungsrampe 15 anschließt, die in die sich etwa in einer Ebene erstreckende Haltefläche 11 übergeht, an deren Ende sich ein Drehbegrenzungsanschlag 13 erstreckt.

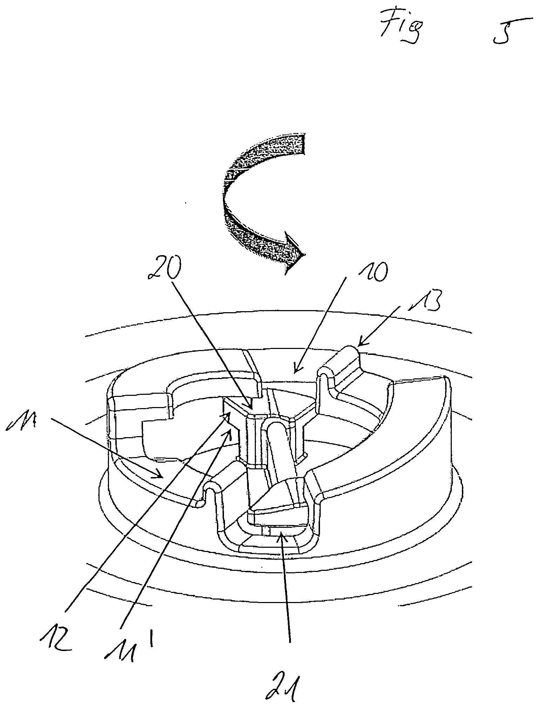

Beim Einsetzen des Ölablassstopfens 3 in die Entleerungsöffnung 2 nimmt dieser in Bezug auf die Entleerungsöffnung 2 etwa die in Figur 5 gezeigte Winkelstellung ein, wobei die Verriegelungshaken 10 in Bezug auf die Umfangsrichtung der Entleerungsöffnung 2 und in Bezug auf eine Drehrichtung entgegen den Uhrzeigersinn in Figur 5 eine Lage vor den Schrägführungen 14 einnehmen. In dieser Winkelstellung des Ölablassstopfens 3 sind die Schrägführungen 14 zunächst ohne Funktion.

Der Ölablassstopfen 3 wird nun über eine kombinierte Steck-Dreh-Bewegung in die Entleerungsöffnung 2 eingesetzt, wobei bei einer Drehbewegung gegen den Uhrzeigersinn Halteflächen 11' an den Verriegelungshaken 10 in Eingriff mit den Führungsrampen 15 gelangen. Eine weitere Drehbewegung des Ölablassstopfens 3 bewirkt Anheben des Ölablassstopfens 3 in axiale Richtung, bis die Halteflächen 11a mit den Halteflächen 11 am Umfang der Entleerungsöffnung 2 in Eingriff gelangen. Schließlich gelangen die Anschläge 12 des Ölablassstopfens 3 mit den Drehbegrenzungsanschlägen 13 am Umfang der Entleerungsöffnung in Anlage. In dieser Lage befindet sich der Ölablassstopfen 3 in der Endlage.

Wie eingangs bereits erwähnt ist der Durchmesser des Körpers 7 des Ölablassstopfens 3 an jeder Stelle kleiner als die lichte Weite der Entleerungsöffnung 2.

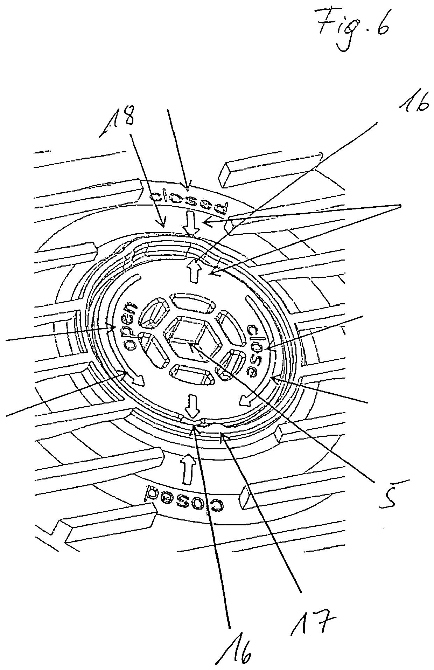

Die Verriegelung des Ölablassstopfen 3 wird über an diametral gegenüberliegenden Seiten des Verschlussdeckels 6 des Ölablassstopfens 3 vorgesehene Verriegelungsnocken 16 bewirkt, die, wie dies insbesondere Figur 6 zu entnehmen ist, mit einem Rastvorsprung 17 und einer Freistellung 18 einer nach außen hervorstehenden Einfassung 19 der Entleerungsöffnung 2 zusammenwirken.

Wie vorstehend bereits erwähnt, ist der Ölablassstopfen 3 mit radialem Spiel in die Entleerungsöffnung 2 eingesetzt. Bei einer Drehbewegung des Ölablasstopfens 3 in Richtung des in Figur 6 mit "Close" bezeichneten Pfeils (von außen im Uhrzeigersinn) bewirkt, dass der Verriegelungsnocken 16 am Umfang des Ölablassstopfens 3 zunächst auf den Rastvorsprung 17 am Umfang der Entleerungsöffnung 2 aufläuft. Aufgrund der schwimmenden Lagerung des Ölablassstopfens 3 kann dieser wegen der Elastizität der Dichtung des Ölablassstopfens 3 nun insgesamt eine radiale Ausweichbewegung vollziehen, wobei der diametral gegenüberliegende Verriegelungsnocken 16 in die Freistellung 18 in der Einfassung 19 eintauchen kann. In der Endlage des Ölablassstopfens 3 kommt der Verriegelungsnocken 16 im Uhrzeigersinn hinter dem Rastvorsprung 17 zu liegen, der gegenüberliegende Verriegelungsnocken 16 liegt gegen das auslaufseitige Ende der Freistellung 18 an.

Wie dies insbesondere der Darstellung in Figur 2 zu entnehmen ist, sind auf der dem Inneren der Ölwanne 1 zugekehrten Seite der Verriegelungshaken 10 jeweils Gleitschrägen 20 vorgesehen, welche insbesondere beim Aufdrehen/Herausdrehen des Ölablassstopfens 3 mit der Unterseite/Außenseite der Schrägführungen 14 in Anlage gelangen, so dass eine Drehbewegung von außen betrachtet gegen den Uhrzeigersinn gleichzeitig eine axiale Führung des Ölablassstopfens 3 in die geöffnete Stellung bewirkt, wobei das Maß der Verschränkung "A" der Schrägführungen so gewählt ist, dass eine Axialbewegung "A" des Ölablassstopfens 3 in die Öffnungsstellung geringfügig größer als die Schnurstärke der O-Ring-Dichtung 9 ist, so dass durch die erzwungene Axialbewegung beim Aufdrehen des Ölablassstopfens 3 die O-Ring-Dichtung 9 außer Eingriff mit der Entleerungsöffnung 2 der Ölwanne 1 gelangt.

Mit 21 (siehe Figur 5) sind fensterartige Durchbrüche in dem die Entleerungsöffnung innen einfassenden Kragen bezeichnet, die zugleich Ablauföffnungen für das Öl definieren. Die Entleerungsöffnung 2 befindet sich an der tiefsten Stelle der Ölwanne 1.

### Bezugszeichen:

- 1: Ölwanne
- 2: Entleerungsöffnung
- 3: Ölablassstopfen
- 4: Verrippung
- 5: Innensechskant
- 6: Verschlussdeckel
- 7: Körper
- 8: Nut
- 9: O-Ring-Dichtung
- 10: Verriegelungshaken
- 11: Halteflächen
- 11': Halteflächen
- 12: Anschläge
- 13: Drehbegrenzungsanschläge
- 14: Schrägführung
- 15: Führungsrampen
- 16: Verriegelungsnocken
- 17: Rastvorsprung
- 18: Freistellung
- 19: Einfassung
- 20: Gleitschrägen
- 21: Durchbrüche

## Patentansprüche

1. Motorölwanne oder Getriebeölwanne für ein Kraftfahrzeug, mit wenigstens einer in Einbaulage unteren Entleerungsöffnung (2) und mit wenigstens einem in die Entleerungsöffnung (2) einsetzbaren Verschlusskörper als Ölablassstopfen (3), umfassend im Wesentlichen einen Verschlussdeckel (6) mit einem einstückig angeformten Körper (7), der in Einbaulage die Entleerungsöffnung (2) durchgreift, wobei die Entleerungsöffnung (2) und der Verschlusskörper komplementär zueinander ausgebildete Teile des die Motorölwanne oder Getriebeölwanne abdichtenden Verschlusses bilden, wobei der Verschluss als Bajonettverschluss ausgebildet ist und der Verschlusskörper in der Entleerungsöffnung (2) durch ein Dichtmittel zentriert ist, wobei die Entleerungsöffnung (2) umfänglich Führungsflächen aufweist, die formschlüssig mit Teilen des Verschlusskörpers zusammenwirken, wobei der Verschlusskörper wenigstens über einen Bogenabschnitt einer Drehbewegung innerhalb der Entleerungsöffnung (2) oder am Umfang der Entleerungsöffnung (2) so geführt ist, dass ein aufgebrachtes Drehmoment in eine Axialbewegung des Verschlusskörpers umgesetzt wird, wobei der Verschlusskörper wenigstens zwei Verriegelungshaken (10) oder Verriegelungszapfen aufweist, die wenigstens in der verschlossenen Endlage des Verschlusskörpers Halteflächen (11) am Umfang der Entleerungsöffnung (2) hintergreifen, **dadurch gekennzeichnet, dass** eine dem Inneren der Motorölwanne oder Getriebeölwanne zugekehrte Seite der Verriegelungshaken (10) jeweils Gleitschrägen (20) aufweist, welche beim Herausdrehen des Ölablassstopfens (3) mit einer Unterseite von Schrägführungen (4) in Anlage gelangen, sodass eine Drehbewegung von außen betrachtet gegen den Uhrzeigersinn gleichzeitig eine axiale Führung des Ölablassstopfens (3) in die geöffnete Stellung bewirkt, wobei das Maß einer Verschränkung "A" der Schrägführungen (14) so gewählt ist, dass eine Axialbewegung "A" des Ölablassstopfens (3) in eine Öffnungsstellung geringfügig größer als die Schnurstärke einer O-Ring-Dichtung (9) ist, sodass durch eine erzwungene Axialbewegung beim Ausdrehen des Ölablassstopfens (3) die O-Ring-Dichtung (9) außer Eingriff mit der Entleerungsöffnung (2) der Motorölwanne oder Getriebeölwanne gelangt.

2. Motorölwanne oder Getriebeölwanne nach Anspruch 1, **dadurch gekennzeichnet, dass** die lichte Weite der Entleerungsöffnung (2) größer als der Durchmesser des die Entleerungsöffnung (2) durchsetzenden Teils des Verschlusskörpers ist, wobei das Übermaß der Entleerungsöffnung (2) so gewählt ist, dass der Verschlusskörper mit radialem Spiel in die Entleerungsöffnung einsetzbar ist.

3. Motorölwanne oder Getriebeölwanne nach einem der Ansprüche 1 oder 2, **dadurch gekennzeichnet, dass** der Verschluss wenigstens einen innenliegenden Drehanschlag (13) bildet, der eine Endlage des Verschlusskörpers in der verschlossenen Stellung definiert.

4. Motorölwanne oder Getriebeölwanne nach einem der Ansprüche 1 bis 3, **dadurch gekennzeichnet, dass** eine Verriegelung des Verschlusskörpers in der Endlage bei verschlossener Stellung vorgesehen ist.

5. Motorölwanne oder Getriebeölwanne nach einem der Ansprüche 1 bis 4, **dadurch gekennzeichnet, dass** bei Verriegelung des Verschlusskörpers in einer Endlage an dessen Umfang wenigstens ein Rastvorsprung und/oder eine Rastvertiefung vorgesehen ist, der/die mit wenigstens einer Rastvertiefung und/oder einem Rastvorsprung am Umfang der Entleerungsöffnung (2) zusammenwirkt.

6. Motorölwanne oder Getriebeölwanne nach Anspruch 1, **dadurch gekennzeichnet, dass** der Verschlusskörper über einen ersten Bogenabschnitt am Umfang der Entleerungsöffnung (2) axial in die verschlossene und vorzugsweise verriegelte Endlage geführt ist.

7. Motorölwanne oder Getriebeölwanne nach einem der Ansprüche 1 oder 6, **dadurch gekennzeichnet, dass** der Verschlusskörper über einen zweiten Bogenabschnitt axial von der verriegelten Endlage in eine geöffnete Stellung geführt ist, wobei der erste und der zweite Bogenabschnitt bezogen auf den Umfang der Entleerungsöffnung (2) verschiedene Winkelbereiche einnehmen.

8. Motorölwanne oder Getriebeölwanne nach Anspruch 7, **dadurch gekennzeichnet, dass** der zweite Bogenabschnitt die Axialbewegung des Verschlusskörpers beschreibt, deren Maß wenigstens der Schnurstärke der an dem Verschlusskörper vorgesehenen O-Ring-Dichtung entspricht.

## Claims

1. Engine oil pan or transmission oil pan for a motor vehicle, comprising at least one, in the installed position, lower drain opening (2) and at least one closing body, which can be inserted in the drain opening (2) as oil drain plug (3), comprising substantially a closing cover (6) with an integrally formed body (7) which, in an installed state, extends through the drain opening (2), the drain opening (2) and the closing body forming parts, configured to be complementary to one another, of the closure which seals the engine oil pan or transmission oil pan, the closure being in the form of a bayonet closure and the closing body being centered in the drain opening (2) by a sealing means, the drain opening (2) having on its periphery guide faces which cooperate in a form-fitting manner with parts of the closing body, the closing body, at least over one arc segment of a rotary movement, being guided within the drain opening (2) or on the periphery of the drain opening (2) in such a manner that an applied torque is converted into an axial movement of the closing body, the closing body having at least two locking hooks (10) or locking pegs which engage behind retaining faces (11) on the periphery of the drain opening (2) at least in the closed end position of the closing body, **characterized in that** a side of the looking hooks (10) oriented towards the interior of the engine oil pan or transmission oil pan has in each case slide faces (20) which come into abutment, as the oil drain plug (3) is twisted out, with a lower side of oblique guides (4), so that, viewed from the outside, a counterclockwise rotary movement at the same time causes the oil drain plug (3) to be guided axially to the open position, the amount of stagger "A" of the oblique guides (14) being selected such that an axial movement "A" of the oil drain plug (3) to an open position is slightly greater than the strand thickness of an 0-ring seal (9), so that the 0-ring seal (9) moves out of engagement with the drain opening (2) of the engine oil pan or transmission oil pan as a result of a forced axial movement when the oil drain plug (3) is twisted out.

2. Engine oil pan or transmission oil pan according to Claim 1, **characterized in that** the clear width of the drain opening (2) is larger than the diameter of the part of the closing body which passes through the drain opening (2), the overdimensioning of the drain opening (2) being selected such that the closing body can be inserted in the drain opening with radial play.

3. Engine oil pan or transmission oil pan according to either of Claims 1 and 2, **characterized in that** the closure has at least one inwardly located rotation stop (13) which defines an end position of the closing body in the closed state.

4. Engine oil pan or transmission oil pan according to any one of Claims 1 to 3, **characterized in that** a locking of the closing body in the end position in the closed state is provided.

5. Engine oil pan or transmission oil pan according to any one of Claims 1 to 4, **characterized in that**, when the closing body is locked in an end position, at least one latching projection and/or latching recess which cooperates with at least one latching recess and/or latching projection on the periphery of the drain opening (2) is provided on the periphery of the closing body.

6. Engine oil pan or transmission oil pan according to Claim 1, **characterized in that**, over a first arc segment, the closing body is guided axially on the periphery of the drain opening (2) to the closed and preferably locked end position.

7. Engine oil pan or transmission oil pan according to either of Claims 1 and 6, **characterized in that**, over a second arc segment, the closing body is guided axially from the locked end position to an open position, the first and second arc segments occupying different angular ranges in relation to the circumference of the drain opening (2).

8. Engine oil pan or transmission oil pan according to Claim 7, **characterized in that** the second arc segment describes the axial movement of the closing body the amount of which at least equals the strand thickness of the 0-ring seal provided on the closing body.

## Revendications

1. Carter d'huile de moteur ou carter d'huile de boîte de vitesses pour un véhicule automobile, avec une ouverture de vidange inférieure en position de montage (2) et avec au moins un corps de fermeture insérable dans l'ouverture de vidange (2) comme bouchon d'évacuation d'huile (3), comprenant essentiellement un couvercle de fermeture (6) avec un corps (7) formé d'une seule pièce, qui en position de montage traverse l'ouverture de vidange (2), dans lequel l'ouverture de vidange (2) et le corps de fermeture constituent des parties de forme complémentaire l'une à l'autre de la fermeture obturant le carter d'huile de moteur ou le carter d'huile de boîte de vitesses, dans lequel la fermeture est réalisée en forme de fermeture à baïonnette et le corps de fermeture est centré dans l'ouverture de vidange (2) par un moyen d'étanchéité, dans lequel l'ouverture de vidange (2) présente en périphérie des faces de guidage, qui coopèrent par complémentarité de forme avec des parties du corps de fermeture, dans lequel le corps de fermeture est guidé au moins sur une partie courbe d'un mouvement de rotation à l'intérieur de l'ouverture de vidange (2) ou à la périphérie de l'ouverture de vidange (2), de telle manière qu'un couple de rotation appliqué soit converti en un déplacement axial du corps de fermeture, dans lequel le corps de fermeture présente au moins deux crochets de verrouillage (10) ou deux tourillons de verrouillage, qui s'accrochent dans la position finale fermée du corps de fermeture à des faces de retenue (11) à la périphérie de l'ouverture de vidange (2), **caractérisé en ce qu'**un côté des crochets de verrouillage (10) tourné vers l'intérieur du carter d'huile de moteur ou du carter d'huile de boîte de vitesses présente respectivement des rampes de glissement (20), qui lors d'un dévissage du bouchon d'évacuation d'huile (3) viennent s'appliquer sur un côté inférieur de guides obliques (4), de telle manière qu'un mouvement de rotation contraire au sens horaire considéré de l'extérieur provoque en même temps un guidage axial du bouchon d'évacuation d'huile (3) dans la position ouverte, dans lequel la dimension d'une limitation "A" des guides obliques (14) est choisie de telle manière qu'un déplacement axial "A" du bouchon d'évacuation d'huile (3) dans une position d'ouverture soit légèrement plus grand que l'épaisseur du boudin d'un joint torique (9), de telle manière que par un déplacement axial forcé lors du dévissage du bouchon d'évacuation d'huile (3) le joint torique (9) perde le contact avec l'ouverture de vidange (2) du carter d'huile de moteur ou du carter d'huile de boîte de vitesses.

2. Carter d'huile de moteur ou carter d'huile de boîte de vitesses selon la revendication 1, **caractérisé en ce que** la largeur libre de l'ouverture de vidange (2) est plus grande que le diamètre de la partie du corps de fermeture qui traverse l'ouverture de vidange (2), dans lequel la surcote de l'ouverture de vidange (2) est choisie de telle manière que le corps de fermeture puisse être inséré avec un jeu radial dans l'ouverture de vidange.

3. Carter d'huile de moteur ou carter d'huile de boîte de vitesses selon une des revendications 1 ou 2, **caractérisé en ce que** la fermeture forme au moins une butée de rotation interne (13), qui définit une position finale du corps de fermeture dans la position fermée.

4. Carter d'huile de moteur ou carter d'huile de boîte de vitesses selon l'une quelconque des revendications 1 à 3, **caractérisé en ce qu'**il est prévu un verrouillage du corps de fermeture dans la position finale dans la position fermée.

5. Carter d'huile de moteur ou carter d'huile de boîte de vitesses selon l'une quelconque des revendications 1 à 4, **caractérisé en ce que** lors du verrouillage du corps de fermeture dans une position finale, il est prévu à sa périphérie au moins une saillie d'encliquetage et/ou un creux d'encliquetage, qui coopère avec au moins un creux d'encliquetage et/ou une saillie d'encliquetage à la périphérie de l'ouverture de vidange (2).

6. Carter d'huile de moteur ou carter d'huile de boîte de vitesses selon la revendication 1, **caractérisé en ce que** le corps de fermeture est guidé sur une première partie courbe à la périphérie de l'ouverture de vidange (2) axialement dans la position finale fermée et de préférence verrouillée.

7. Carter d'huile de moteur ou carter d'huile de boîte de vitesses selon une des revendications 1 ou 6, **caractérisé en ce que** le corps de fermeture est guidé sur une deuxième partie courbe axialement de la position finale verrouillée à une position ouverte, dans lequel la première et la deuxième parties courbes occupent des domaines angulaires différents par rapport à la périphérie de l'ouverture de vidange (2).

8. Carter d'huile de moteur ou carter d'huile de boîte de vitesses selon la revendication 7, **caractérisé en ce que** la deuxième partie courbe décrit le mouvement axial du corps de fermeture, dont la dimension correspond au moins à l'épaisseur du boudin du joint torique prévu sur le corps de fermeture.
